(19) Europäisches Patentamt

European Patent Office

Office européen des brevets

(11) **EP 1 291 168 B1**

(12) **EUROPÄISCHE PATENTSCHRIFT**

(45) Veröffentlichungstag und Bekanntmachung des Hinweises auf die Patenterteilung:
**04.10.2006 Patentblatt 2006/40**

(51) Int Cl.:
*B32B 27/36* (2006.01)   *C08L 67/02* (2006.01)

(21) Anmeldenummer: **02019067.4**

(22) Anmeldetag: **28.08.2002**

(54) **Biaxial orientierte Polyesterfolie mit guter Metallhaftung, Verfahren zu ihrer Herstellung und ihre Verwendung**

Biaxially oriented polyester film with good metal adhesion, method for its preparation and its use

Film en polyester à orientation biaxiale ayant une bonne adhésion aux métaux, méthode pour sa production et son utilisation

(84) Benannte Vertragsstaaten:
**DE GB LU**

(30) Priorität: **08.09.2001 DE 10144123**

(43) Veröffentlichungstag der Anmeldung:
**12.03.2003 Patentblatt 2003/11**

(73) Patentinhaber: **Mitsubishi Polyester Film GmbH**
**65203 Wiesbaden (DE)**

(72) Erfinder:
• **Bartsch, Stefan, Dr.**
**65199 Wiesbaden (DE)**
• **Peiffer, Herbert, Dr. Prof.**
**55126 Mainz (DE)**
• **Davis, Richard Lee**
**65187 Wiesbaden (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
EP-A- 0 945 262   US-A- 5 955 181

**Beschreibung**

Die Erfindung betrifft eine koextrudierte, biaxial orientierte Polyesterfolie mit hoher Metallhaftung bestehend aus einer Basisschicht B und mindestens einer auf der Basisschicht aufgebrachten Deckschicht A. Die Erfindung beinhaltet weiterhin ein Verfahren für die Herstellung der Folie und ihre Verwendung.

In der EP A 0 144 878 werden Folien mit einer Copolyesterbeschichtung auf Basis von Isophthalsäure, aliphatischer Dicarbonsäure und Sulfoisophthalsäure beschrieben, die bereits eine gute Haftung zu Metallen aufweisen. Für gewisse Anwendungen ist diese Metallhaftung jedoch noch verbesserungsfähig.

In der EP A 0 035 835 wird eine Polyesterfolie beschrieben, die eine siegelfähige Deckschicht auf Basis von Isophthalateinheiten enthält. Die hohe Schichtdicke von ≥ 2 μm dieser Schicht führt dazu, dass sich nach der Metallisierung Risse in der Metallschicht bilden, die zu einer Verringerung der Barriere führen und daher nicht akzeptabel sind.

In der EP A 0945262 wird eine Polyesterfolie beschrieben, die eine Deckschicht aus mindestens 40 Gew.-% Ethylen-2,6-naphthalat-Einheiten und bis zu 40 Gew.-% Ethylen-terephtalat-Einheiten aufweist. Diese Deckschicht weist eine Dicke von 0,2 bis 6 μm auf.

In der US 5955181 wird eine Polyesterfolie beschrieben, die eine Deckschicht mit 5-95 Gew.-% Ethylen-2,6-naphthalat-Einheiten und einer Dicke von 0,2 bis 0,5 μm aufweist.

In der EP A 0 878 297 wird eine transparente biaxial orientierte Polyesterfolie mit einer Basisschicht B beschrieben, die zu mindestens 80 Gew.-% aus einem thermoplastischen Polyester besteht, und mindestens einer Deckschicht A, die aus einem Gemisch von Polymeren besteht, das mindestens 40 Gew.-% an Ethylen-2,6-naphthalat-Einheiten und bis zu 40 Gew.-% an Ethylenterephthalateinheiten und/oder bis zu 60 % Einheiten aus cycloaliphatischen oder aromatischen Diolen und/oder Dicarbonsäuren enthält.

Bei einer Folie gemäß Beispiel 11 der EP A 0 878 297 enthält die Deckschicht A 60 Gew.-% Ethylen-2,6-naphthalat-Einheiten. Um die geforderte Sauerstoffpermeation zu erzielen, muss die Schichtdicke der Deckschicht A auf 3 μm angehoben werden. Eine solche Folie weist nach der Metallisierung Risse in der Oberfläche der Folie auf, welche nicht akzeptabel sind. Des weiteren ist eine solche Folie wegen teurer Investitionen und hohen Materialkosten wirtschaftlich ungünstig.

Aufgabe der vorliegenden Erfindung war es, eine biaxial orientierte Polyesterfolie mit hoher Metallhaftung bereitzustellen, die die Nachteile der genannten Folien nach dem Stand der Technik nicht aufweist und sich außerdem durch eine wirtschaftliche Herstellung eine gute Verarbeitbarkeit bei sonst gleich bleibenden oder verbesserten optischen Eigenschaften auszeichnet.

Gegenstand der Erfindung ist eine coextrudierte, biaxial orientierte Polyesterfolie mit guter Metallhaftung, bei der die Polyesterfolie mindestens eine Basisschicht B und mindestens eine Deckschicht A in Gegenwart oder Abwesenheit weiterer üblicher Additive aufweist, dadurch gekennzeichnet, dass die Deckschicht A

a) ein Copolymer mit Einheiten aus Ethylen-2,6-naphthalat in einem Bereich von 20 bis 80 Gew.-% und bis zu 80 Gew.% an Ethylenterephthalateinheiten in Gegenwart oder Abwesenheit von Einheiten aus cycloaliphatischen oder aromatischen Diolen und Dicarbonsäuren enthält,
b) eine Schichtdicke von ≤ 1,0 μm und
c) eine Metallhaftung (nach der Metallisierung) von ≥ 2 N/25 mm aufweist.

Die Erfindung betrifft ferner ein Verfahren zur Herstellung dieser Folie und ihre Verwendung.

Die Deckschicht A enthält vorzugsweise 25 bis 75 Gew.-% und insbesondere 30 bis 70 Gew.-% der genannten Einheiten aus Ethylen-2,6-naphthalat.

Die Folie gemäß der Erfindung weist eine verbesserte Metallhaftung auf, ohne dass Risse in der Metallschicht der metallisierten Folie auftreten. Außerdem kann die Folie auch auf schnelllaufenden Verabeitungsmaschinen verarbeitet werden. Bei der Herstellung der Folie ist weiterhin gewährleistet, dass das Regenerat in einer Konzentration bis zu 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Die Folie gemäß der Erfindung besitzt mindestens zwei Schichten und zwar die Basisschicht B und die metallhaftende Deckschicht A. Vorzugsweise ist sie dreischichtig und umfasst dann eine weitere Deckschicht C, die gleich oder verschieden zu der metallhaftenden Deckschicht A sein kann.

Die Basisschicht B der Folie besteht im allgemeinen aus einem thermoplastischen Polyester, vorzugsweise zu mindestens 90 Gew.-% des Polyesters. Geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly(1,4-cyclohexandimethylenterephthalat), PCDT) sowie aus Ethylenglykol, Naphthalin-2,6-dicarbonsäure und Biphenyl-4,4'-dicarbonsäure (= Polyethylen-2,6-naphthalatbibenzoat, PENBB) oder Gemischen daraus. Bevorzugt sind Polyester, die zu mindestens 90 Mol-%, insbesondere mindestens 95 Mol-%, aus PET und/oder aus PEN bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen-können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind beispielsweise Benzoldicarbonsäuren, Naphthalindicarbonsäuren (wie Naphthalin-1,4- oder -1,6-dicarbonsäure), Biphenyl-x,x' dicarbonsäuren (wie Biphenyl-4,4'-dicarbonsäure), Diphenylacetylen-x,x'-dicarbonsäuren (wie Diphenylacetylen-4,4'-dicarbonsäure) oder Stilben-x,x'-dicarbonsäuren. Von den cycloaliphatischen Dicarbonsäuren sind Cyclohexandicarbonsäuren (z.B. Cyclohexan-1,4-dicarbonsäure) zu nennen. Von den aliphatischen Dicarbonsäuren sind die $(C_3-C_{19})$ Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Deckschicht A besteht aus mindestens einem Copolymeren oder einem Gemisch von Polymeren aus Ethylen-2,6-naphthalat-Einheiten in einem Bereich von 20 bis 80 Gew.-%, vorzugsweise 25 bis 75 Gew. -%, insbesondere 30 bis 70 Gew. -%, und bis zu 80 Gew. -%, vorzugsweise bis zu 75 Gew.-% und insbesondere bis zu 70 Gew.-% an Ethylenterephthalateinheiten und/oder den vorgenannten Einheiten aus cycloaliphatischen oder aromatischen Diolen und/oder Dicarbonsäuren.

Die Copolymere für die Deckschicht A können dabei nach verschiedenen Verfahren hergestellt werden:

a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalateinheiten sind dann in dem Polyester statistisch verteilt.

b) PET und PEN werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepresst und granuliert.

c) PET und PEN werden als Granulat im gewünschten Verhältnis gemischt und die Mischung dem Extruder für die Deckschicht A zugeführt. Hier findet die Umesterung zum Copolymer direkt während der Herstellung der Folie statt. Dieses Verfahren hat den Vorteil, dass es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

Die Deckschicht A besitzt im allgemeinen eine Dicke von $\leq 1,0\ \mu m$, vorzugsweise $\leq 0,9\ \mu m$, insbesondere $\leq 0,8\ \mu m$. Sie macht im allgemeinen weniger als 22 Gew.-%, vorzugsweise weniger als 20 Gew.-% der Gesamtfolie aus.

Für die andere, nicht metallhaftende Deckschicht C oder für eventuell vorhandene Zwischenschichten können prinzipiell die gleichen Polymere verwendet werden, wie zuvor für die Basisschicht B beschrieben wurde. Daneben können in einer besonderen Ausführungsform der Erfindung für die Deckschicht C die gleichen Polymere wie für die Deckschicht A verwendet werden. In diesem Fall ist diese Deckschicht ebenfalls metallhaftend.

Die gewünschten Metallhaftungseigenschaften und die gewünschte Qualität der Metallschicht (keine Risse) der Folie gemäß der Erfindung werden aus der Kombination der Eigenschaften des verwendeten Copolyesters für die metallhaftende Deckschicht und der Einstellung einer Schichtdicke von $\leq 1,0\ \mu m$, vorzugsweise $\leq 0,9\ \mu m$ und insbesondere von $\leq 0,8\ \mu m$ erhalten.

Die Metallhaftung von $\geq 2$ N/25 mm wird erreicht, wenn für die metallhaftende Deckschicht A die oben beschriebenen Polymere verwendet werden. Zur Handhabung der Folie und der Verarbeitbarkeit kann die metallhaftende Deckschicht A modifiziert werden. Dies geschieht am besten mit Hilfe von geeigneten Antiblockmitteln einer ausgewählten Größe, die in einer bestimmten Konzentration der metallhaftenden Schicht zugegeben werden und zwar derart, dass einerseits das Verblocken minimiert und andererseits die Metallhaftung nicht wesentlich verschlechtert werden.

Es wurde festgestellt, dass zu große Deckschichtdicken zu Rissen in der aufgedampften Metallschicht führen. Diese Risse können visuell z.B. in einem Lichtkasten oder im Lichtstrahl eines Diaprojektors erkannt werden und führen zu unerwünschten Eigenschaften der metallisierten Folie, beispielsweise einer Herabsetzung der Barriere gegen Sauerstoff oder Wasserdampf.

In der bevorzugten dreischichtigen Ausführungsweise der erfindungsgemäßen Folie enthalten die beiden Schichten A und C im allgemeinen zusätzlich übliche Additive wie Stabilisatoren und/oder Antiblockmittel. Sie werden zweckmäßig dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt. Auch die Basisschicht B kann zusätzlich diese üblichen Additive enthalten.

Typische Antiblockmittel (in diesem Zusammenhang auch als Pigmente bezeichnet) sind anorganische und/ oder organische Verbindungen, beispielsweise Siliciumdioxid, Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Pigmente können auch Mischungen von zwei und mehr verschiedenen Pigmenten oder Mischungen von Pigmenten gleicher Zusammensetzung, aber unterschiedlicher Partikelgröße gewählt werden. Diese Zusätze können den einzelnen Schichten in den jeweils vorteilhaften Konzentrationen, z.B. als glykolische Dispersion während der Polykondensation oder vorzugsweise über Masterbatche bei der Extrusion zugegeben werden.

Die dem Thermoplasten zugesetzten Bestandteile der Folie können sowohl der Basisschicht als auch einer oder beiden Deckschichten zudosiert werden. Hierfür bietet sich der Extrusionsvorgang, vorzugsweise unter Einschluss des Masterbatch-Verfahrens an.

Wichtig bei der Masterbatch-Technologie ist, dass die Korngröße und das Schüttgewicht des Masterbatches ähnlich denen des Thermoplasten ist, so dass eine homogene Verteilung und damit eine homogene Erzielung der gewünschten Eigenschaften der Folie erfolgen kann.

Bei der Masterbatch-Technologie werden die Zusätze zunächst in einem festen Trägermaterial dispergiert. Als Trägermaterial kommen der Thermoplast selbst, z.B. das Polyethylenterephthalat oder auch andere Polymere, die mit dem Thermoplasten ausreichend verträglich sind, in Frage. Zur Folienherstellung wird das Masterbatch mit dem als Folienrohstoff vorgesehenen Thermoplast vermischt und zusammen in einem Extruder behandelt, wobei die Bestandteile miteinander verschmelzen und so in dem Thermoplasten verteilt werden.

Ein bevorzugtes Pigment ist $SiO_2$ in kolloidaler oder in kettenartiger Form. Diese Formen werden sehr gut in die Polymermatrix eingebunden und erzeugen nur geringfügig Vakuolen. Letztere verursachen im allgemeinen eine Trübung und sind daher möglichst zu vermeiden. Die Durchmesser der eingesetzten Teilchen können in weiten Grenzen schwanken. Es hat sich jedoch als zweckmäßig erwiesen, Teilchen mit einem mittleren Primärpartikeldurchmesser von kleiner als 100 nm, bevorzugt kleiner als 60 nm, besonders bevorzugt kleiner als 50 nm, und/oder Teilchen mit einem mittleren Primärpartikeldurchmesser von größer als 1 $\mu$m, bevorzugt größer als 1,5 $\mu$m, besonders bevorzugt größer als 2 $\mu$m, zu verwenden. Diese zuletzt beschriebenen Teilchen sollten jedoch keinen mittleren Partikeldurchmesser aufweisen, der größer als 5 $\mu$m ist.

Zur Erzielung der vorgenannten Eigenschaften der Folie gemäß der Erfindung hat es sich als zweckmäßig erwiesen, die Pigmentkonzentration in der Basisschicht B niedriger zu wählen als in den beiden Deckschichten A und C. Bei einer dreischichtigen Folie vom genannten Typ wird in der Basisschicht B die Pigmentkonzentration im Bereich von 0 bis 0,15 Gew.-%, vorzugsweise ≤ 0,12 Gew.-% und insbesondere ≤ 0,10 Gew.-% liegen. Der Durchmesser der eingesetzten Teilchen ist prinzipiell nicht eingeschränkt, jedoch sind Teilchen mit einem mittleren Durchmesser von ≥ 1 $\mu$m besonders bevorzugt.

Zur Erzielung des genannten Eigenschaftsprofils der Folie können die Deckschichten A und C in einer Ausführungsform mehr Pigmente (d.h. höhere Pigmentkonzentration) als die Basisschicht B aufweisen. Die Pigmentkonzentration in diesen Deckschichten A und C liegt im allgemeinen im Bereich von 0,01 bis 1,0 Gew.-%, vorzugsweise von 0,02 bis 0,8 Gew.-% und insbesondere von 0,03 bis 0,6 Gew.-%, jeweils bezogen auf das Gewicht der Deckschicht. Beide Deckschichten A und C können gleich stark pigmentiert sein. Ebenso kann die Pigmentkonzentration in der metallhaftenden Deckschicht A geringer gewählt werden als in der nicht metallhaftenden Deckschicht C, um die gewünschten Eigenschaften zu verbessern oder das Verarbeitungsverhalten weiter zu optimieren. In einer besonders günstigen Variante kann die Deckschicht A auch nicht pigmentiert sein. Vorteilhaft wird eine dreischichtige Folie mit ABC-Schichtaufbau verwendet.

Zwischen der Basisschicht und den Deckschichten kann sich gegebenenfalls noch eine Zwischenschicht befinden. Diese kann wiederum aus den für die Basisschicht beschriebenen Polymeren bestehen, vorzugsweise aus dem für die Basisschicht verwendeten Polyester. Sie kann auch die angeführten üblichen Additive enthalten. Die Dicke der Zwischenschicht ist im allgemeinen ≥0,3 $\mu$m und liegt vorzugsweise im Bereich von 0,5 bis 15 $\mu$m, insbesondere von

1,0 bis 10 $\mu$m und ganz besonders bevorzugt von 1,0 bis 5 $\mu$m.

Bei der besonders vorteilhaften dreischichtigen Ausführungsform der Folie ist die Dicke der Deckschicht A $\leq$ 1,0 $\mu$m, vorzugsweise im Bereich von 0,1 bis 0,9 $\mu$m, insbesondere von 0,1 bis 0,8 $\mu$m. Die Dicke der Deckschicht C ist im allgemeinen > 0,1 $\mu$m und liegt im Bereich von 0,2 bis 4,0 $\mu$m, vorzugsweise von 0,2 bis 3,5 $\mu$m, insbesondere von 0,3 bis 3 $\mu$m und ganz besonders bevorzugt von 0,3 bis 2,5 $\mu$m, wobei die Deckschichten A und C gleich oder verschieden dick sein können.

Die Gesamtdicke der Polyesterfolie gemäß der Erfindung kann innerhalb bestimmter Grenzen variieren. Sie beträgt 3 bis 80 $\mu$m, vorzugsweise 4 bis 50 $\mu$m, insbesondere 5 bis 30 $\mu$m, wobei die Schicht B im allgemeinen einen Anteil von 5 bis 95 % an der Gesamtdicke hat.

Bei dem Verfahren zur Herstellung der erfindungsgemäßen Folien geht man am besten so vor, dass man die Polymere für die Basisschicht B und die beiden Deckschichten A und C drei Extrudern zuführt. Etwa vorhandene Fremdkörper oder Verunreinigungen lassen sich aus der Polymerschmelze vor der Extrusion abfiltrieren. Die Schmelzen werden dann nach bekannten Coextrusionsverfahren in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt. Die Folie wird anschließend biaxial gestreckt (orientiert), und die biaxial gestreckte Folie wird thermofixiert und gegebenenfalls an der zur Behandlung vorgesehenen Oberflächenschicht corona- oder flammbehandelt.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung lässt sich mit Hilfe zweier oder mehrerer entsprechend dem angestrebten Streckverhältnis verschieden schnell laufenden Walzen durchführen. Zum Querverstrecken benutzt man allgemein einen entsprechenden Kluppenrahmen. Die biaxiale Verstreckung kann jedoch auch in einem speziellen Kluppenrahmen simultan in beiden Richtungen durchgeführt werden.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, vorzugsweise von 3:1 bis 5,5:1. Das Querstreckverhältnis liegt allgemein im Bereich von 3,0:1 bis 5,0:1, vorzugsweise von 3,5:1 bis 4,5:1. Vor der Querstreckung kann man eine oder beide Oberfläche(n) der Folie nach den bekannten Verfahren In-line beschichten. Die In-line-Beschichtung kann beispielsweise zu einer verbesserten Haftung einer eventuell aufgebrachten Druckfarbe, aber auch zur Verbesserung des antistatischen Verhaltens oder des Verarbeitungsverhaltens dienen.

Bei der nachfolgenden Thermofixierung wird die Folie etwa 0,1 bis 10 Sekunden lang bei einer Temperatur von 150 bis 250 °C gehalten. Anschließend wird die Folie in üblicher Weise aufgewickelt.

Zur Einstellung weiterer gewünschter Eigenschaften kann die Folie in bekannter Weise zusätzlich beschichtet werden. Typische Beschichtungen sind dehäsiv, antistatisch, schlupfverbessernd, anti-beschlagend (Feuchtigkeit) oder weitere haftvermittelnd wirkende Schichten. Es bietet sich an, diese zusätzlichen Schichten über In-line coating mittels wässriger Dispersionen vor dem Streckschritt in Querrichtung auf die Folie aufzubringen.

Die Folie gemäß der Erfindung eignet sich ausgezeichnet für den Einsatz in der flexiblen Verpackung, und zwar insbesondere dort, wo eine hervorragende Metallhaftung voll zum Tragen kommt. Dies sind beispielsweise sogenannte "Bag-in-box Verpackungen", in denen ein Mehrschichtverbund aus metallisiertem PET und beidseitig hierauf kaschierter Polyethylen-Folie verwendet wird.

Die nachstehende Tabelle 1 zeigt die Eigenschaften der Deckschicht A:

Tabelle 1

|  | allgemeiner Bereich | vorzugsweise | Insbesondere | Einhelt | Messmethode |
|---|---|---|---|---|---|
| **DECKSCHICHT A** | | | | | |
| PEN/PET-Copolymer-Gehalt | 80 : 20 - 20 : 80 | 75 : 25 - 25 : 75 | 70 : 30 - 30 : 70 | Gew.-% | |
| Metallhaftung | > 2 | > 2,5 | > 3 | N/25 mm | intern |
| Dicke der Deckschicht | $\leq$ 1 | $\leq$ 0,9 | $\leq$ 0,8 | $\mu$m | |

Die Messung der einzelnen Eigenschaften wurde gemäß den folgenden Normen bzw. Verfahren durchgeführt:

SV-Wert (standard viscosity)

Die Standardviskosität SV (DCE) wurde in Anlehnung an DIN 53726 in Dichloressigsäure gemessen. Die intrinsische Viskosität (IV) berechnet sich wie folgt aus der Standardviskosität:

$$IV\ (DCE) = 6{,}67 \cdot 10^{-4}\ SV\ (DCE) + 0{,}118.$$

Metallhaftung

Die Bestimmung der Metallhaftung erfolgte nach einer internen Vorschrift: Das metallisierte Folienmuster (300 mm längs * 180 mm quer) gemäß der vorliegenden Erfindung wurde vor dem Verkleben auf einen glatten Karton (200 mm längs * 180 mm quer; ca. 400 g/m², gebleicht, Außenlagen gestrichen) gelegt, die überstehenden Folienenden auf die Rückseite umgeschlagen und mit Klebeband fixiert.

Die Verklebung der Folie gemäß der Erfindung mit einer Standardpolyesterfolie von 12 μm Dicke (z.B. Melinex 800) erfolgte mit einem Rakelgerät und Rakelstab Nr. 3 der Fa. Erichsen, wobei zuerst ca. 1,5 ml Klebstoff (Novacote NC 275+CA 12; Mischverhältnis: 4/1+7 Teile Ethylacetat) auf die metallisierte Seite der Folie (= Deckschicht A) aufgetragen wurde. Nach dem Ablüften des Lösemittels wurde die Standardpolyesterfolie mit einer Metallrolle nach DIN EN 20 535 (Breite 200 mm, Durchmesser 90 mm, Masse 10 kg) auf die Deckschicht A aufkaschiert. Die Parameter der Kaschierung sind:

| | |
|---|---|
| Klebstoffmenge: | 5+/- 1 g/m² |
| Lüften nach Auftrag des Klebers: | 4 min +/- 15 s |
| Rakelstärke (Erichsen): | 3 |
| Geschwindigkeitsstufe des Rakels: | ca. 133 mm/s |
| Aushärtzeit des Verbundes: | 2 h bei 70 °C in einem Umluftofen |

Mit einem 25+/- 1 mm Streifenschneider wurden ca. 100 mm lange Proben entnommen. (Hierbei sind ca. 50 mm Verbund und 50 mm unverklebte Einzellagen zum Fixieren/Einspannen des Prüfkörpers notwendig.) Die Prüflinge wurden mittels doppelseitigem Klebeband mit der Rückseite der metallisierten Folie gemäß der Erfindung (Basisschicht B oder Deckschicht C) vollflächig auf einem Trägerblech fixiert. Die Platte mit dem aufgeklebten Verbund wurde in die untere Spannbacke der Zugprüfmaschine eingespannt, wobei der Klemmabstand 100 mm betrug. Das nicht kaschierte Ende der Standard-Polyesterfolie wurde derart in die obere Spannbacke der Zugprüfmaschine (Fa. Zwick) eingespannt, dass sich ein Schälwinkel von 180° ergab.

| | |
|---|---|
| Probenbreite | 25 mm |
| Vorkraft: | 0,1 N |
| Messlänge: | 25 mm |
| Abzugsgeschwindigkeit bis Vorkraft: | 25 mm/min |
| Vorweg: | 5 mm |
| Prüfweg: Empfindlichkeit: | 40 mm 0,01 N |
| Abzugsgeschwindigkeit: | 100 mm/min |

Das Messergebnis für die Schälkraft ist gleichzusetzen mit der minimalen Haftkraft zwischen der Metallschicht und der erfindungsgemäßen Folie, da die Haftkraft zwischen dem Kleber und der Standardfolie deutlich größer ist.

Angegeben wird die mittlere Schälkraft in N/25 mm, gerundet auf eine Nachkommastelle, die nötig ist, um bei einer Abzugsgeschwindigkeit von 100 mm/min den Verbund zu trennen.

Rissbildung (interne Prüfmethode)

Die Ermittlung der Risse wurde nach einer internen Methode durchgeführt: Ein Folienmuster einer metallisierten Folie mit einer Breite von 1,0 m und einer Länge von 0,5 m wurde auf einen Lichtkasten gelegt. Die visuell erkennbaren Defekte (Risse) wurden ausgezählt.

Beispiele

Bei den nachstehenden Beispielen und den Vergleichsbeispielen handelt es sich um mehrschichtige, biaxial orientierte ABC-Folien (Ausnahme Vergleichsbeispiel 2: AB-Folie), die nach bekannten Coextrusionsverfahren auf einer Extrusionsstraße hergestellt wurden. Die Gesamtfolienstärke betrug jeweils 12 $\mu$m, mit Ausnahme des Beispiels 7 (23 $\mu$m) und des Vergleichsbeispiels 2 (15 $\mu$m). Die Deckschicht A in den Beispielen 1 bis 7 (Herstellung wie Beispiel 1) und dem Vergleichsbeispiel bestand aus 100 Gew.-% eines Copolyesters aus Ethylenterephthalat- und Ethylennaphthalateinheiten in wechselnden Molverhältnissen. In der Basisschicht B wurden 100 Gew.-% eines Polyethylenterephthalats (RT 49 der Firma Kosa) eingesetzt. Die Deckschicht C setzte sich aus 88 Gew.-% PET (RT 49 der Firma Kosa) und 12 Gew.-% eines Masterbatches aus 97,75 Gew.-% (RT 49 der Firma Kosa) und 1,0 Gew.-% ® Sylobloc 44 H (synthetisches $SiO_2$ der Fa. Grace) und 1,25 Gew.-% Aerosil TT 600 (kettenartiges $SiO_2$ der Fa. Degussa) zusammen. Als Vergleichsbeispiel 2 (Folienaufbau AB) wurde das Beispiel 1 der EP-A 0 035 835 nachgestellt.

Beispiele 1 bis 7 und Vergleichsbeispiel 1

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Ebenfalls wurden Chips aus Polyethylenterephthalat und das Pigmentgemisch enthaltende PET-Chips in den Extruder für die nicht metallhaftende Deckschicht C gegeben.

Chips aus Polyethylenterephthalat und Polyethylen-2,6-naphthalat wurden in verschiedenen Mischungsverhältnissen bei 160 °C auf eine Restfeuchte von weniger als 100 ppm getrocknet und direkt dem Extruder für die Deckschichtherstellung A zugeführt und bei etwa 300 °C extrudiert. Die Schmelze wurde filtriert und in einer Mehrschichtdüse zu einem Flachfilm ausgeformt und als Deckschicht A der Basisschicht überlagert. Der Mehrschichtfilm wurde über die Düsenlippe ausgestoßen und auf einer Kühlwalze verfestigt. Die Verweilzeit der beiden Polymeren für die Deckschicht A in dem Extrusionsverlauf betrug ca. 5 min. Es entstand hierbei ein Copolymer bei den angegebenen Bedingungen.

Es wurde durch Coextrusion und anschließende stufenweise Orientierung in Längs- und Querrichtung eine transparente dreischichtige Folie mit ABC-Aufbau hergestellt.

Der Folienaufbau und die erzielten Eigenschaften der einzelnen Beispiele sind der Tabelle 2 zu entnehmen.

Die Herstellungsbedingungen in den einzelnen Verfahrensschritten waren:

| | | | | |
|---|---|---|---|---|
| Extrusion: | Temperaturen | A-Schicht: | 290 | °C |
| | | B-Schicht: | 290 | °C |
| | | C-Schicht: | 290 | °C |
| | Temperatur der Abzugswalze | | 30 | °C |
| Längsstreckung: | Temperatur: | | 80-120 | °C |
| | Längsstreckverhältnis: | | 4,4 | |
| Querstreckung: | Temperatur: | | 80-136 | °C |
| | Querstreckverhältnis | | 4,4 | |
| Fixierung: | Temperatur: | | 230 | °C |
| | Dauer: | | 3 | s |

Vergleichsbeispiel 2

Es wurde Beispiel 1 aus EP-A-0 035 835 nachgestellt. In der Basisschicht B wurde Polyethylenterepthalat (RT 49 der Firma Kosa) eingesetzt, in der Deckschicht A ein Polymer mit 82 Mol-% Ethylenterephthalat und 18 Mol-% Ethylenisophthalat. In die Deckschicht wurde $SiO_2$ mit einem mittleren Durchmesser von 1 $\mu$m in einer Konzentration von 0,25 Gew.-%, bezogen auf das Gewicht der Deckschicht, eingebracht. Die Deckschicht hatte eine Dicke von 2,25 $\mu$m bei einer Foliengesamtdicke von 15 $\mu$m. Nach der Metallisierung konnten in der Metallschicht im Lichtkasten 12 Risse erkannt werden.

Tabelle 2

| Beispiel | Deckschicht A Mol-%* | Schichtdicken μm | | | Metallhaftung N/25 mm | Risse | Verhalten bei der Metallhaftungsmethode |
|---|---|---|---|---|---|---|---|
| | | A | B | C | | | |
| B 1 | 80 : 20 | 0,7 | 9,8 | 1,5 | 2,0 | 0 | vollflächige Abtrennung |
| B 2 | 20 : 80 | 0,7 | 9,8 | 1,5 | 2,1 | 0 | vollflächige Abtrennung |
| B 3 | 70 : 30 | 0,7 | 9,8 | 1,5 | 2,8 | 0 | vollflächige Abtrennung |
| B 4 | 30 : 70 | 0,7 | 9,8 | 1,5 | 2,7 | 0 | vollflächige Abtrennung |
| B5 | 50 : 50 | 0,7 | 9,8 | 1,5 | 3,0 | 0 | vollflächige Abtrennung |
| B 6 | 80 : 20 | 0,9 | 9,6 | 1,5 | 2,9 | 0 | vollflächige Abtrennung |
| B 7 | 80 : 20 | 0,7 | 20,8 | 1,5 | 3,0 | 0 | vollflächige Abtrennung |
| VB 1 | 80 : 20 | 1,1 | 9,4 | 1,5 | 3,0 (Rissbildung) | 10 | Folie reißt beim Test ein |
| VB 2 | 82 : 18** | 2,25 | 12,25 | - | 6,4 (Rissbildung) | 12 | vollflächige Abtrennung |

\* Verhältnis Ethylenterephthalat : Ethylennaphthalat
\*\* Verhältnis Ethylenterephthalat : Ethylenisophthalat, Nachstellung Beispiel 1 EP-A-0 035 835

**Patentansprüche**

1. Biaxial orientierte Polyesterfolie mit guter Metallhaftung, bei der die Polyesterfolie mindestens eine Basisschicht B und mindestens eine Deckschicht A in Gegenwart oder Abwesenheit weiterer üblicher Additive aufweist, **dadurch gekennzeichnet, dass** die Deckschicht A

    a) ein Copolymer mit Einheiten aus Ethylen-2,6-naphthalat in einem Bereich von 20 bis 80 Gew.-% und bis zu 80 Gew.-% an Ethylenterephthalat-Einheiten in Gegenwart oder Abwesenheit von Einheiten aus cycloaliphatischen oder aromatischen Diolen und Dicarbonsäuren enthält,
    b) eine Schichtdicke von ≤ 1,0 μm und
    c) eine Metallhaftung (nach der Metallisierung) von ≥ 2 N/25 mm aufweist.

2. Polyesterfolie nach Anspruch 1, **dadurch gekennzeichnet, dass** die Deckschicht A Ethylen-2,6-naphthalat-Einheiten in einem Bereich von 25 bis 75 Gew.-% und bevorzugt von 30 bis 70 Gew.-% und bis zu 75 Gew.-%, bevorzugt bis zu 70 Gew.-%, an Ethylenterephthalat-Einheiten enthält.

3. Polyesterfolie nach Anspruch 1 oder 2, **dadurch gekennzeichnet, dass** die Dicke der Deckschicht A ≤ 0,9 μm, insbesondere ≤ 0,8 μm, ist.

4. Polyesterfolie nach einem oder mehreren der Ansprüche 1 bis 3, **dadurch gekennzeichnet, dass** die Folie eine weitere Deckschicht C auf der der Deckschicht A entgegengesetzten Seite der Basisschicht B aufweist.

5. Verfahren zur Herstellung einer biaxial orientierten Polyesterfolie mit guter Metallhaftung nach Anspruch 1, **dadurch gekennzeichnet, dass** die den einzelnen Schichten der Folie entsprechenden Schmelzen nach einem Extrusionsverfahren zu einem flachen Schmelzefilm durch eine Flachdüse coextrudiert werden, die so erhaltene Folie zur Verfestigung auf einer oder mehreren Walze/n abgezogen, anschließend biaxial gestreckt (orientiert) und die biaxial gestreckte Folie dann thermofixiert und schließlich abgekühlt und aufgewickelt wird.

6. Verfahren nach Anspruch 5, **dadurch gekennzeichnet, dass** für die Deckschicht A ein Copolymer mit Einheiten aus Ethylen-2,6-naphthalat in einem Bereich von 20 bis 80 Gew.-% und bis zu 80 Gew.% an Ethylenterephthalat-Einheiten in Gegenwart oder Abwesenheit von Einheiten aus cycloaliphatischen oder aromatischen Diolen und Dicarbonsäuren eingesetzt wird.

7. Verfahren nach Anspruch 5 und/oder 6, **dadurch gekennzeichnet, dass** ein Regenerat in einer Konzentration bis zu 60 Gew.-%, bezogen auf das Gesamtgewicht der Folie, eingesetzt wird.

8. Verwendung der Polyesterfolie nach einem oder mehreren der Ansprüche 1 bis 4 für den Einsatz in flexiblen Verpackungen.

9. Verwendung nach Anspruch 8 für "Bag-in-box Verpackungen".

**Claims**

1. A biaxially oriented polyester film with good metal adhesion, where the polyester film has at least one base layer B and at least one outer layer A in the presence or absence of other conventional additives, wherein the outer layer A

   a) comprises a copolymer having from 20 to 80% by weight of ethylene 2,6-naphthalate units and up to 80% by weight of ethylene terephthalate units in the presence or absence of units made from cycloaliphatic or aromatic diols and dicarboxylic acids,
   b) has a thickness of $\leq 1.0\ \mu m$, and
   c) has metal adhesion (after metalization) of $\geq 2$ N/25 mm.

2. The polyester film as claimed in claim 1, wherein the outer layer A comprises from 25 to 75% by weight, preferably from 30 to 70% by weight, of ethylene 2,6-naphthalate units, and up to 75% by weight, preferably up to 70% by weight, of ethylene terephthalate units.

3. The polyester film as claimed in claim 1 or 2, wherein the thickness of the outer layer A is $\leq 0.9\ \mu m$, in particular $\leq 0.8\ \mu m$.

4. The polyester film as claimed in one or more of claims 1 to 3, wherein the film has another outer layer C on that side of the base layer B which is opposite to the outer layer A.

5. A process for producing a biaxially oriented polyester film with good metal adhesion as claimed in claim 1, which comprises using an extrusion process to coextrude, through a flat-film die, the melts corresponding to the individual layers of the film, to give a flat melt film, drawing off the resultant film on one or more rollers for solidification, then stretching (orienting) the film biaxially, and then heat-setting the biaxially stretched film, and finally cooling and winding-up the film.

6. The process as claimed in claim 5, wherein for the outer layer A use is made of a copolymer having from 20 to 80% by weight of ethylene 2,6-naphthalate units and up to 80% by weight of ethylene terephthalate units in the presence or absence of units made from cycloaliphatic or aromatic diols and dicarboxylic acids.

7. The process as claimed in claim 5 and/or 6, wherein a regrind is used at a concentration of up to 60% by weight, based on the total weight of the film.

8. The use of the polyester film as claimed in one or more of claims 1 to 4 in flexible packaging.

9. The use as claimed in claim 8 for "bag-in-box" packaging.

**Revendications**

1. Film polyester orienté biaxialement ayant une bonne adhésion aux métaux, dans lequel le film polyester présente au moins une couche de base B et au moins une couche de recouvrement A en présence ou en l'absence d'autres additifs usuels, **caractérisé en ce que** la couche de recouvrement A comprend

   a) un copolymère ayant des motifs d'éthylène-2,6-naphtalate dans une plage de 20 à 80 % en poids et jusqu'à 80 % en poids de motifs d'éthylène téréphtalate en présence ou en l'absence de motifs de diols cycloaliphatiques ou aromatiques et d'acides dicarboxyliques,
   b) une épaisseur de couche de $\leq 1,0\ \mu m$ et
   c) une adhésion aux métaux (après métallisation) de $\geq 2$ N/25 mm.

**2.** Film polyester selon la revendication 1, **caractérisé en ce que** la couche de recouvrement A comprend des motifs d'éthylène-2,6-naphtalate dans une plage de 25 à 75 % en poids et de préférence de 30 à 70 % en poids et jusqu'à 75 % en poids, de préférence jusqu'à 70 % en poids, de motifs d'éthylène téréphtalate.

**3.** Film polyester selon la revendication 1 ou 2, **caractérisé en ce que** l'épaisseur de la couche de recouvrement A ≤ 0,9 μm, en particulier ≤ 0,8 μm.

**4.** Film polyester selon une ou plusieurs des revendications 1 à 3, **caractérisé en ce que** le film présente une autre couche de recouvrement C sur la face de la couche de base B opposée à la couche de recouvrement A.

**5.** Procédé de fabrication d'un film polyester orienté biaxialement ayant une bonne adhésion aux métaux selon la revendication 1, **caractérisé en ce que** les matières fondues correspondant aux différentes couches de film sont coextrudées, après un procédé d'extrusion, à travers une filière plate en un film fondu plat, le film ainsi obtenu est dévidé à des fins de solidification sur un ou plusieurs rouleaux, puis étiré biaxialement (orienté) et le film étiré biaxialement est ensuite thermofixé et puis refroidi et bobiné.

**6.** Procédé selon la revendication 5, **caractérisé en ce que** l'on met en oeuvre pour la couche de recouvrement A un copolymère ayant des motifs d'éthylène-2,6-naphtalate dans une plage de 20 à 80 % en poids et jusqu'à 80 % en poids de motifs d'éthylène téréphtalate en présence ou en l'absence de motifs de diols cycloaliphatiques ou aromatiques et d'acides dicarboxyliques.

**7.** Procédé selon la revendication 5 et/ou 6, **caractérisé en ce que** l'on met en oeuvre un recyclé en une concentration allant jusqu'à 60 % en poids, par rapport au poids total du film.

**8.** Utilisation du film polyester selon une ou plusieurs des revendications 1 à 4 pour la mise en oeuvre dans des emballages flexibles.

**9.** Utilisation selon la revendication 8 pour des "emballages bag-in-box".